# DEMANDE DE BREVET EUROPEEN

(11) **EP 1 312 956 A1**
(43) Date de publication de la demande: **21.05.2003**
(21) Numéro de dépôt: 02292798.2
(22) Date de dépôt: 08.11.2002
(51) Int. Cl.: G02B 6/38

(54) **Fiche optique et dispositif de connexion optique**

(30) Priorité: 15.11.2001 FR 0114774
(71) Demandeur: RADIALL, 93116 Rosny-Sous-Bois (FR)
(72) Inventeur: Mannevy, Alain, 38290 Frontonas (FR); Bouvier, Pierre, 38300 Bourgoin Jallieu (FR)
(74) Mandataire: Leszczynski, André

(57) **Abrégé**

Fiche optique comportant un corps de fiche (2) muni d'un organe de verrouillage permettant son assemblage dans un élément complémentaire de connexion, un ensemble ferrule comportant une ferrule (3) dans laquelle est maintenue une fibre optique terminée par une face optique, et un élément élastique agissant sur l'ensemble ferrule.

La face optique est oblique par rapport à l'axe de la fibre, et le corps de fiche et l'ensemble ferrule sont agencés de manière à ce que dans une première zone axiale (35) de longueur non nulle, s'étendant à partir de la position libre et jusqu'avant la position nominale de l'ensemble ferrule dans une configuration fiche/raccord/fiche, le jeu angulaire de l'ensemble ferrule par rapport au corps de fiche soit proche de zéro, et dans une deuxième zone (36) située dans le prolongement immédiat de la première zone axiale et comprenant au moins la zone comprise entre le recul nominal et le recul maximal de l'ensemble ferrule dans la configuration fiche/raccord/fiche, le jeu angulaire de l'ensemble ferrule par rapport au corps de fiche soit supérieur audit jeu angulaire dans la première zone.

## Description

La présente invention a pour objet une fiche optique, un dispositif de connexion optique comportant un élément de raccord et deux fiches optiques connectées, et un dispositif de connexion optique comportant une fiche optique connectée à une embase.

Une fiche optique comporte, de manière connue en soi, un corps de fiche muni d'un organe de verrouillage permettant son assemblage dans un élément complémentaire de connexion, un ensemble ferrule introduit dans ledit corps et comportant une ferrule dans laquelle est maintenue une fibre optique terminée par une face optique, et un élément élastique agissant sur l'ensemble ferrule.

A l'état libre, l'élément élastique de la fiche repousse la face optique de la fibre le plus en avant possible de la fiche. Lors de l'accouplement avec un élément complémentaire de connexion, celui-ci agit sur une butée avant de l'ensemble ferrule, et comprime l'élément élastique jusqu'à ce que la butée arrière du corps de fiche coïncide avec la butée de l'organe de verrouillage de l'élément complémentaire de connexion.

L'interface des dispositifs de connexion est généralement définie par une norme ou une spécification pour garantir d'une part que la même fiche puisse s'accoupler à des types différents d'éléments complémentaires de connexion, et d'autre part que les fiches issues de fabricants différents, mettant en oeuvre des modes de réalisation différents, puissent toutes s'accoupler sur le même élément de connexion.

Pour une interface donnée, la distance entre la butée avant de l'ensemble ferrule et la butée arrière de la fiche est une donnée intrinsèque de l'interface.

Dans une configuration courante de connexion, à savoir une configuration Fiche/Raccord/Fiche, on définit la distance nominale comme étant la moitié de la distance séparant les deux butées de l'organe de verrouillage du raccord.

Cette distance nominale est la principale caractéristique intrinsèque d'une interface. C'est à partir d'elle que les autres dimensions d'interface sont définies.

Le couplage optique est souvent réalisé par contact physique entre les faces optiques des fiches. La butée avant d'un ensemble ferrule d'une fiche est la face optique de l'autre fiche et réciproquement. Les normes de fiches définissent alors les tolérances d'effort de compression (F mini, F maxi) devant être exercé sur un ensemble ferrule, pour maintenir la distance entre la butée avant de l'ensemble ferrule et la butée arrière de la fiche entre des valeurs de travail maxi et mini de part et d'autre de la distance nominale.

Pour une interface donnée, ces caractéristiques s'imposent à tous les modes de réalisation aptes à être intermariables avec les fiches existantes normalisées. En effet, les caractéristiques de compression entre deux faces optiques sont directement liées à la qualité du contact physique entre ces faces.

Pour une configuration Fiche/Embase utilisant les fiches s'accouplant aussi dans la configuration Fiche/Raccord/Fiche, les dimensions de l'interface sont elles aussi définies à partir de la distance nominale du raccord.

La présente invention concerne essentiellement les fiches optiques dont la face optique est oblique par rapport à l'axe de la fibre.

Dans une configuration Fiche/Raccord/Fiche où les faces optiques sont en contact physique oblique (APC, Angled Physical Contact), un défaut de rotation angulaire autour de l'axe de la fibre provoque une non-tangence entre les faces optiques et empêche un contact physique des coeurs des fibres en regard.

Le raccord comporte généralement un manchon de guidage agencé de sorte que les ferrules, lorsqu'elles y sont introduites, sont soumises à frottement suffisant pour maintenir l'orientation angulaire même lors d'un recul d'une ferrule sous l'action de la ferrule en regard.

L'orientation angulaire de l'ensemble ferrule par rapport au corps de fiche est en général, dans l'art antérieur, précis à l'état libre lorsque l'ensemble ferrule est repoussé au maximum vers l'avant du corps de fiche par l'élément élastique agissant sur l'ensemble ferrule. Lors de l'accouplement, lorsque l'ensemble ferrule recule vers l'arrière du corps de fiche, le maintien de l'orientation angulaire n'est plus assuré par la fiche mais par le frottement du manchon de guidage.

Dans le cas d'une configuration fiche optique/embase, la précision de l'orientation angulaire initiale peut être perdue car l'élément de guidage de l'embase dans lequel la ferrule est guidée est en général rigide et ne permet pas de maintenir l'orientation angulaire initiale de la ferrule lorsque celle-ci subit un recul.

Cette perte de l'orientation initiale provoque des pertes importantes de couplage avec le composant actif car, du fait de la face oblique, le faisceau sort en biais par rapport à l'axe de la ferrule. Le départ d'orientation angulaire provoque une rotation, autour de l'axe de la ferrule, du point d'impact du faisceau qui risque d'échapper au système de focalisation sur l'élément actif du composant.

Le défaut angulaire toléré dépend de chaque configuration de composant. Pour une configuration donnée, la valeur angulaire admissible peut être prédéterminée de manière précise. Dans la pratique et dans tous les cas, elle doit être aussi serrée que possible, pratiquement toujours inférieure à 2°.

La présente invention vise à maintenir l'orientation angulaire de la face optique de la fibre lors de l'accouplement lorsque la face optique est oblique par rapport à l'axe de la fibre.

L'invention a pour objet une fiche optique comportant un corps de fiche muni d'un organe de verrouillage permettant son assemblage dans un élément complémentaire de connexion, un ensemble ferrule introduit dans ledit corps et comportant une ferrule dans laquelle est maintenue une fibre optique terminée par une face optique, et un élément élastique agissant sur l'ensemble ferrule, ladite fiche étant caractérisée par le fait que la face optique est oblique par rapport à l'axe de la fibre et le corps de fiche et l'ensemble ferrule sont agencés de manière à ce que :
- dans une première zone axiale de longueur non nulle, s'étendant à partir de position libre et jusqu'avant la position nominale de l'ensemble ferrule dans une configuration fiche/raccord/fiche, le jeu angulaire de l'ensemble ferrule par rapport au corps de fiche soit proche de zéro, de préférence inférieur à une valeur angulaire prédéterminée,
- dans une deuxième zone située dans le prolongement immédiat de la première zone et comprenant au moins la zone comprise entre le recul nominal et le recul maximal de l'ensemble ferrule dans la configuration fiche/raccord/fiche, le jeu angulaire de l'ensemble ferrule par rapport au corps de fiche soit supérieur audit jeu angulaire dans la première zone.

Grâce à l'invention, sur une distance de recul non nulle définie par la première zone précitée, l'orientation angulaire de la ferrule est maintenue, ce qui est particulièrement avantageux dans la configuration fiche/embase. En effet, dans cette configuration, l'orientation angulaire de la ferrule n'est, en général, pas maintenue par un frottement, comme cela est le cas dans la configuration fiche/raccord/fiche.

La valeur angulaire prédéterminée peut être inférieure ou égale à deux degrés.

Dans un exemple de mise en oeuvre de l'invention, la longueur de la première zone est d'au moins 0,1 mm, par exemple sensiblement égale à 0,45 mm.

La fiche peut être agencée de manière à ce que, dans la deuxième zone, le jeu latéral en translation entre l'ensemble ferrule et le corps de fiche et/ou le jeu de parallélisme entre les axes respectifs du corps de fiche et de l'ensemble ferrule soient non nuls.

Ainsi, dans la configuration fiche/raccord/fiche, l'invention permet de maintenir les faces optiques des deux fibres l'une en face de l'autre indépendamment des sollicitations mécaniques subies par les fiches.

De manière générale, grâce à l'invention, il est possible de maintenir l'orientation angulaire d'une ferrule tout en autorisant son flottement dans la fiche correspondante, en fonctionnement normal.

Dans la deuxième zone, le jeu angulaire de l'ensemble ferrule par rapport au corps de fiche peut être limité.

Lorsque la ferrule est orientable suivant une pluralité de secteurs angulaires, la fiche est par exemple agencée de manière à empêcher, dans la deuxième zone, une rotation de la ferrule lui permettant de changer de secteur angulaire pour assurer une fonction de "tuning".

Dans un exemple de mise en oeuvre de l'invention, la deuxième zone est comprise entre le recul nominal dans une configuration fiche/raccord/fiche et une distance équivalente à au moins deux fois ce recul nominal.

La fiche peut comporter une troisième zone, située à l'arrière des première et deuxième zones, dans laquelle la rotation de l'ensemble ferrule par rapport au corps de fiche est libre.

De préférence, le corps de fiche comporte au moins deux reliefs s'étendant dans ladite première zone, lesdits reliefs et l'ensemble ferrule étant aptes à coopérer de manière à limiter la rotation de l'ensemble ferrule par rapport au corps de fiche.

Les reliefs peuvent présenter une forme choisie et/ou être réalisés dans un matériau choisi de manière à présenter une certaine aptitude à être déformés.

Dans un exemple de mise en oeuvre de l'invention, l'ensemble ferrule comporte un porte-ferrule présentant une portion longitudinale cylindrique de section transversale polygonale et le corps de fiche une cavité présentant, dans ladite première zone, une section transversale sensiblement polygonale du même type que la section du porte-ferrule, les sections polygonales étant notamment du type hexagonal, et le corps de fiche comporte quatre reliefs s'étendant dans ladite première zone, chacun suivant une arête longitudinale de la cavité et disposée par paires en regard.

En variante, l'ensemble ferrule comporte un porte-ferrule présentant une portion longitudinale cylindrique de section transversale circulaire et comportant au moins deux logements, et les reliefs du corps de fiche sont constitués par des nervures s'étendant au moins sur ladite première zone et aptes à s'engager chacun dans un logement.

Les nervures peuvent être au nombre de deux ou quatre et réparties équi-angulairement autour de l'axe du corps de fiche.

Les logements peuvent être constitués par des encoches équi-angulairement réparties autour de l'axe de l'ensemble ferrule et présentant une section transversale sensiblement rectangulaire.

Les nervures peuvent être au nombre de deux et présenter chacune sur ses flancs, dans ladite première zone, des saillies, l'épaisseur d'une nervure étant sensiblement égale à la largeur d'un logement au niveau des saillies, cette épaisseur étant plus faible dans la deuxième zone.

Les nervures peuvent présenter une hauteur inférieure à la profondeur des logements.

Dans un exemple de mise en oeuvre de l'invention, le corps de fiche comporte quatre nervures présentant chacune, sur un flanc, une saillie, les quatre saillies étant en regard deux à deux et s'étendant sur la première zone, les nervures s'étendant sur les première et deuxième zone.

La fiche peut comporter un porte-ferrule présentant à son extrémité frontale une forme généralement tronconique avec des facettes aptes à coopérer avec des facettes complémentaires réalisées sur le corps de fiche, lorsque l'ensemble ferrule est repoussé au maximum vers l'avant du corps de fiche.

La fibre optique peut être polie à son extrémité, et le plan de polissage étant incliné par rapport à l'axe de la fibre.

L'invention a encore pour objet un dispositif de connexion comportant une fiche optique telle que définie plus haut, et une embase, agencée de manière à ce que la zone de travail de l'ensemble ferrule dans cette configuration fiche/embase se situe dans ladite première zone de la fiche.

Ainsi, l'orientation angulaire de la ferrule est maintenue lors du fonctionnement dans l'embase.

Dans un premier mode de réalisation, l'embase comporte un élément de guidage destiné à recevoir la ferrule, l'élément de guidage étant agencé de manière à ce que la ferrule, lorsqu'elle y est introduite, ne subisse aucun frottement sensible.

L'embase comporte une butée avant de la ferrule et une butée arrière coopérant avec une butée de l'organe de verrouillage de la fiche. La distance entre les deux butées de l'embase est, selon l'invention, plus grande que la distance nominale, c'est-à-dire la moitié de la distance entre les butées de verrouillage d'un raccord utilisé dans la configuration fiche/raccord/fiche.

Dans un second mode de réalisation, l'embase comporte un élément de guidage de la ferrule maintenant l'orientation angulaire par frottement.

L'embase peut être une embase optique active, notamment un récepteur optique.

Les fiches peuvent être du type FC, LC, SC ou MU. La distance normalisée entre la position libre et la position nominale est de 0,3 à 0,6 mm pour le type LC, de 0,15 à 0,5 mm pour les types FC et SC et de 0,2 à 0,6 mm pour le type MU.

L'invention sera mieux comprise à la lecture de la description détaillée qui va suivre, d'exemples de mise en oeuvre non limitatifs, et à l'examen du dessin annexé, sur lequel :
- la figure 1 représente très schématiquement et partiellement une fiche optique non-assemblée conforme à l'invention,
- la figure 2 représente de manière très schématique et partielle la fiche optique de la figure 1, connectée à une autre fiche optique dans un élément complémentaire de connexion,
- la figure 3 représente de manière très schématique et partielle, en coupe longitudinale, une fiche optique de la figure 1 assemblée dans une embase,
- la figure 4 représente schématiquement et partiellement, en coupe transversale dans la première zone, une fiche optique conforme à un premier exemple de mise en oeuvre de l'invention,
- les figures 5A à 5D sont des vues en coupe suivant V-V illustrant différentes positions de l'ensemble ferrule dans le corps de fiche de la fiche de la figure 4,
- la figure 6 représente schématiquement et partiellement, en coupe longitudinale, une fiche optique conforme à un deuxième exemple de mise en oeuvre de l'invention,
- la figure 7 est une coupe schématique et partielle, suivant VII-VII, de l'ensemble ferrule de la fiche optique de la figure 6,
- la figure 8 est une coupe schématique et partielle suivant VIII-VIII du corps de fiche de la fiche optique de la figure 6,
- la figure 9 est une vue analogue à celle de la figure 6, sans l'ensemble ferrule,
- la figure 10 représente schématiquement et partiellement, en coupe longitudinale, dans la première zone, une fiche optique conforme à un troisième exemple de mise en oeuvre de l'invention,
- la figure 11 est une vue analogue à celle de la figure 10, représentant une fiche optique conforme à un quatrième exemple de mise en oeuvre de l'invention, et
- la figure 12 représenté schématiquement et partiellement, en perspective, un corps de fiche et un ensemble ferrule conformes à un cinquième exemple de mise en oeuvre de l'invention.

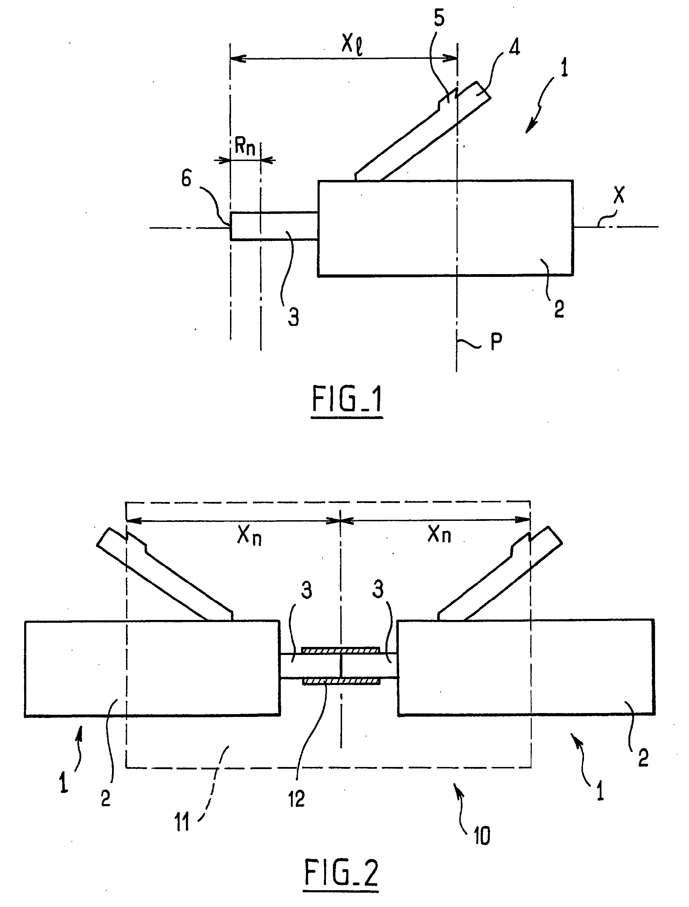

On a représenté sur la figure 1, de manière très schématique, une fiche optique 1 conforme à l'invention, comportant un corps de fiche 2 et un ensemble ferrule dont on aperçoit sur cette figure seulement la partie avant de la ferrule 3. Cette dernière sert à maintenir l'extrémité d'une fibre optique F présentant une face optique 6. Un ressort, non visible sur la figure 1, disposé dans le corps de fiche 2, permet de repousser l'ensemble ferrule vers l'avant du corps de fiche 2.

La face optique 6 est polie et est orientée de manière oblique par rapport à l'axe X de la ferrule.

Le corps de fiche 2 comporte une patte 4 formant un organe de verrouillage selon l'invention. Cette patte 4 comporte un relief d'encliquetage 5 servant de butée lorsque la fiche 1 est assemblée avec un élément complémentaire de connexion.

Dans la configuration de la figure 1, l'ensemble ferrule est en position libre, c'est-à-dire qu'il est repoussé par le ressort au maximum vers l'avant du corps de fiche 2.

La distance entre, d'une part, le plan de référence P commun à la fiche 1 et à un élément complémentaire de connexion, lorsqu'ils sont assemblés, et, d'autre part, la face optique 6 est alors désignée par la référence X₁.

On a représenté sur la figure 2 un dispositif de connexion 10 comportant deux fiches 1 assemblées dans un élément de raccord 11 représenté en pointillés. Les ferrules 3 respectives des fiches 1 sont guidées dans un manchon de guidage 12 permettant d'assurer l'alignement entre les deux ferrules 3 et une bonne connexion des deux fibres optiques correspondantes.

Après l'assemblage, du fait de l'action de la ferrule en regard, chacune des ferrules 3 recule sur une certaine distance appelée recul nominal Rₙ, la distance entre la face optique 6 et le plan P étant alors appelée distance nominale Xᵣ.

En fonctionnement normal, le recul de l'ensemble ferrule est compris entre deux positions extrêmes, le recul minimal et le recul maximal, ces derniers définissant une zone de travail de l'ensemble ferrule.

Lors de son introduction dans le manchon de guidage 12, la ferrule 3 frotte suffisamment contre la paroi intérieure de celui-ci de manière à bloquer la ferrule 3 en rotation. L'orientation angulaire de la ferrule 3 est ainsi conservée même lorsque le recul de l'ensemble ferrule dans le corps de fiche 2 est non nul.

La configuration qui vient d'être décrite est appelée configuration fiche/raccord/fiche.

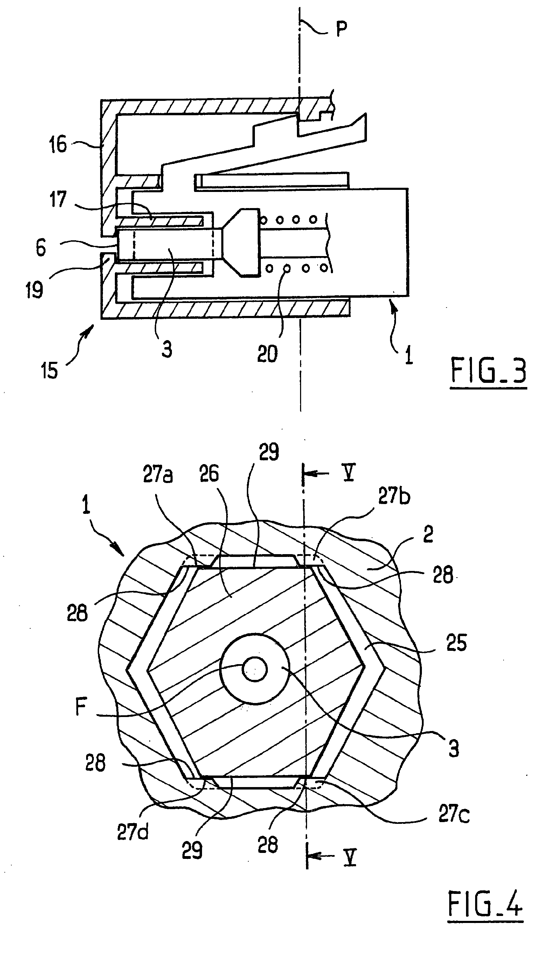

On a représenté de manière très schématique sur la figure 3 un dispositif de connexion 15 conforme à l'invention, comportant une embase 16 dans laquelle est engagée une fiche 1.

Cette configuration est appelée configuration fiche/embase.

L'embase 16 est, dans l'exemple décrit, une embase active agencée en récepteur optique.

L'embase 16 comporte un manchon de guidage 17 permettant de recevoir la ferrule 3 de la fiche 1. Le manchon 17 est rigide et présente, à l'avant, une butée 19. Lors de son introduction dans le manchon 17, la ferrule 3 ne subit aucun frottement sensible et, lorsque la face optique 6 vient contre la butée 19, l'ensemble ferrule recule consécutivement à la compression du ressort 20.

Comme on le verra par la suite, la fiche 1 et l'embase 16 sont agencées de manière à ce que l'orientation angulaire prédéterminée de l'ensemble ferrule par rapport au corps de fiche 2 soit conservée pendant l'opération de montage et en fonctionnement.

On va maintenant décrire plus en détail la structure de la fiche optique 1.

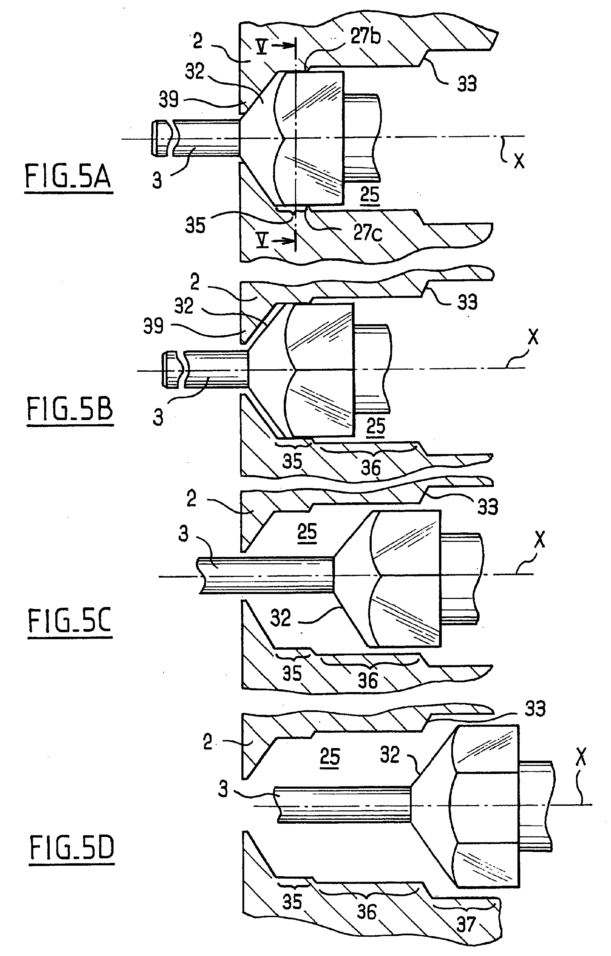

Comme cela est représenté sur les figures 4 et 5A à 5D, le corps de fiche 2 comporte une cavité intérieure 25 de section transversale généralement hexagonale.

L'ensemble ferrule comporte un porte-ferrule 26 présentant une section transversale également hexagonale, la section du porte-ferrule 26 ayant des dimensions inférieures à celles de la section de la cavité 25.

Le porte-ferrule, dans la position libre illustrée à la figure 5A, vient en butée contre une paroi 39 du corps de fiche 2.

La paroi de cavité 25 comporte quatre reliefs 27a à 27d disposés par paires en regard l'une de l'autre, les reliefs 27a, 27b, 27c, et 27d de chaque paire s'étendant sensiblement le long d'une arête longitudinale de la cavité 25.

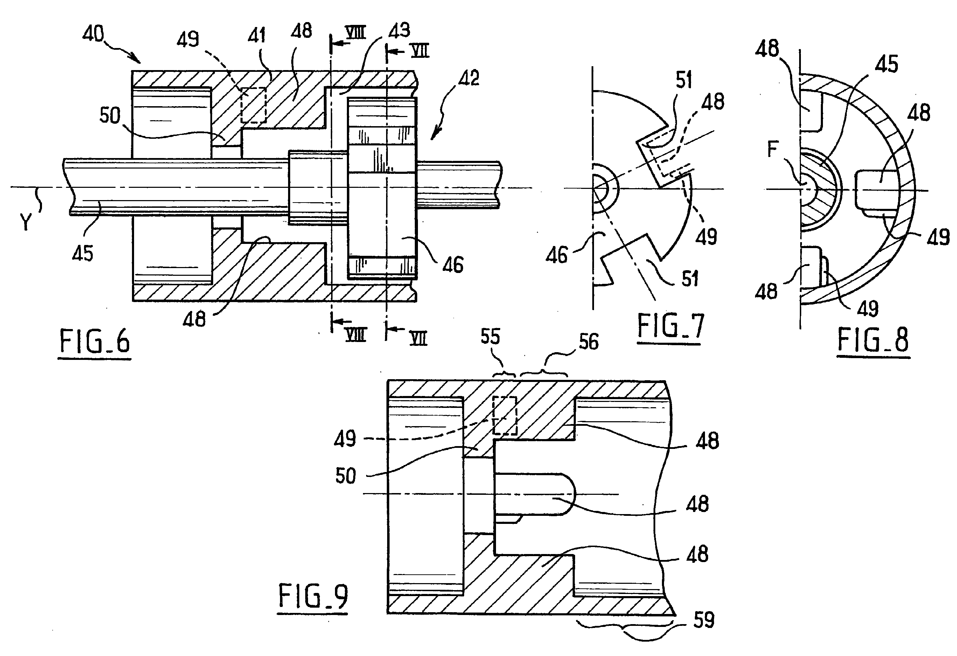

En coupe transversale, comme illustré à la figure 6, les reliefs 27a à 27d définissent sensiblement les quatre sommets d'un rectangle.

Dans l'exemple décrit, la longueur des reliefs 27a à 27d est de 0,45 mm, étant inférieure ou égale au recul nominal de l'ensemble ferrule dans la configuration de la figure 2, c'est-à-dire dans la configuration fiche/raccord/fiche.

La fiche 1, de type LC ou SC, présente quatre ou six secteurs angulaires, permettant d'orienter la ferrule 3 dans un secteur angulaire privilégié correspondant à une transmission optimale.

Cette orientation est particulièrement bien adaptée aux fibres monomode.

On appelle première zone 35 au sens de la présente invention la zone s'étendant sur toute la longueur des reliefs 27a à 27d.

Les reliefs 27a à 27d définissent des surfaces d'appui planes 28 sur lesquelles viennent en appui deux faces latérales opposées 29 du porte-ferrule 26. Ainsi, le jeu angulaire de l'ensemble ferrule par rapport au corps de fiche 2 est proche de zéro, étant inférieur à deux degrés.

Le jeu angulaire précité provient notamment des tolérances de fabrication des différents éléments.

En revanche, l'ensemble ferrule peut coulisser sur une faible distance dans une direction latérale parallèle aux deux faces 29 et, par conséquent, le jeu latéral de l'ensemble ferrule dans le corps de fiche est non nul.

On remarquera également que l'axe de l'ensemble ferrule peut être déplacé légèrement par rapport à l'axe du corps de fiche 2 et, par conséquent, le jeu de parallélisme entre l'ensemble ferrule et le corps de fiche 2 est non nul.

Autrement dit, comme illustré aux figures SA et 5B, dans la première zone 35, la fiche présente un jeu angulaire extrêmement faible tout en autorisant un jeu latéral et un jeu de parallélisme non nuls, c'est-à-dire un certain flottement de l'ensemble ferrule dans le corps de fiche.

Dans le prolongement de la première zone 35, se trouve une deuxième zone 36 dépourvue de reliefs 27a à 27d.

Ainsi, dans cette deuxième zone 36, le jeu angulaire entre l'ensemble ferrule et le corps de fiche 2 est supérieur à deux degrés et strictement inférieur à ± 30°. Typiquement, le jeu angulaire est de ± 10°.

Dans cette deuxième zone 36, le jeu latéral et le jeu de parallélisme précités peuvent être relativement importants.

La deuxième zone 36 comprend toute la zone comprise entre le recul nominal et le recul maximal de travail. Ce dernier est inférieur ou égal au double du recul nominal.

Dans ce cas, on comprend que, dans la configuration fiche/raccord/fiche représentée à la figure 2, lorsqu'une fiche fonctionne dans la première zone 35, l'autre fiche fonctionne dans la deuxième zone 36.

Dans le cas où la première zone 35 ne s'étend pas jusqu'à la position de recul nominal, c'est-à-dire que la deuxième zone 36 est plus étendue, les fiches en regard peuvent fonctionner toutes les deux dans la deuxième zone 36. Les jeux de parallélisme et les jeux latéraux des deux fiches s'ajoutent afin de limiter des contraintes mécaniques sur l'assemblage des deux ferrules.

Comme illustré sur la figure 5C, les dimensions respectives des sections transversales du porte-ferrule 26 et de la cavité 25 sont choisies de manière à empêcher, dans la deuxième zone 36, une rotation de l'ensemble ferrule par rapport au corps de fiche 2 suffisante pour permettre un changement de secteur angulaire de la ferrule.

Ainsi, dans les zones 35 et 36, le secteur angulaire choisi est conservé.

Derrière la deuxième zone 36, la cavité 25 forme une troisième zone 37 présentant un élargissement de la section transversale par rapport aux zones précédentes 35 et 36.

Les dimensions de la section dans la troisième zone 37 sont choisies de manière à permettre un changement de secteur angulaire de l'ensemble ferrule, comme illustré sur la figure 5D.

Dans le cas où la fiche comporte un ressort boudin, le recul de l'ensemble ferrule dans cette troisième zone 37 se produit avant que les spires du ressort ne soient jointives.

Lorsqu'un opérateur souhaite changer le secteur angulaire de l'ensemble ferrule, il provoque le recul de l'ensemble ferrule dans le corps de fiche de manière à amener l'ensemble ferrule dans la troisième zone 37, puis tourne l'ensemble ferrule de manière à le positionner dans un secteur angulaire choisi parmi les six secteurs angulaires, puis ramène l'ensemble ferrule dans sa position libre.

Comme on peut le voir sur les figures 5A à 5D, le porte-ferrule 6 présente à l'avant une surface 32 généralement légèrement tronconique convergent vers l'avant et le corps de fiche 2 comporte, dans la cavité 25, à la jonction des zones 36 et 37, un épaulement 33 de forme générale tronconique convergent vers l'avant.

Lorsque l'ensemble ferrule passe de la troisième zone 37 dans la deuxième zone 36, la surface 32 coopère avec l'épaulement 33 de manière à guider l'ensemble ferrule dans la cavité 25.

On a représenté en référence aux figures 6 à 9 une fiche optique 40 conforme à un autre exemple de mise en oeuvre de l'invention.

Cette fiche 40 comporte un corps de fiche 41 et un ensemble ferrule 42 d'axe Y introduit dans une cavité cylindrique de révolution 43 du corps de fiche 41.

L'ensemble ferrule 42 comporte une ferrule 45 et un porte-ferrule 46.

Comme on peut le voir notamment sur la figure 9, la cavité 43 comporte, à l'avant, quatre nervures 48 de section transversale sensiblement rectangulaire et s'étendant axialement.

Chacune des nervures 48 comporte une saillie 49 réalisée à l'avant d'un flanc de la nervure 48, ces saillies 49 étant disposées de manière à être en regard deux à deux, comme on peut le voir sur la figure 8.

La hauteur des saillies 49 est inférieure à la hauteur des nervures 48 et chaque saillie 49 s'étend sur une longueur plus faible que celle de la nervure 48 correspondante.

Le corps de fiche 41 comporte, à l'avant, un épaulement 50 définissant un passage pour la ferrule 45.

Comme on peut le voir sur la figure 7, le porte-ferrule 46 présente une section extérieure généralement circulaire.

Ce porte-ferrule 46 comporte quatre encoches 51 régulièrement réparties, destinées chacune à s'engager dans une nervure 48. Ces encoches 51 permettent d'orienter la ferrule dans l'un des quatre secteurs angulaires disponibles.

Les encoches 51 présentent une largeur sensiblement égale à l'épaisseur d'une nervure 48 au niveau de la saillie 49 correspondante.

L'épaisseur des portions de nervures 48 situées à l'arrière des saillies 49 est inférieure à la largeur des encoches 51.

Ainsi, lorsque le porte-ferrule 46 est engagé dans les nervures 48 au niveau des saillies 49, dans la position libre, le jeu angulaire entre la ferrule 45 et le corps de fiche 41 est proche de zéro, étant inférieur à deux degrés.

Autrement dit, dans cette fiche 40, la première zone 55 dans laquelle le jeu angulaire entre l'ensemble ferrule 42 et le corps de fiche 41 est proche de zéro s'étend sur la longueur des saillies 49.

Le corps de fiche 41 peut être réalisé dans un matériau présentant une certaine élasticité.

Ainsi, et en plus du fait que les nervures 48 sont espacées et peuvent être écartées légèrement, le jeu angulaire précité est réduit sensiblement à zéro dans la première zone 55 et l'on évite un coincement éventuel de l'ensemble ferrule 42 dans le corps de fiche 41.

La fiche 40 comporte une deuxième zone 56 au sens de la présente invention s'étendant entre les extrémités longitudinales intérieures respectives des saillies 49 et des nervures 48.

Lorsque l'ensemble ferrule 42 se situe à l'arrière des saillies 49 mais est encore engagé dans les nervures 48, le jeu angulaire entre l'ensemble ferrule 42 et le corps de fiche 41 est supérieur à deux degrés mais le changement de secteur angulaire de la ferrule 46 reste impossible.

Comme cela est représenté à la figure 6, lorsque l'ensemble ferrule 42 est repoussé vers l'arrière du corps de fiche 41, le porte-ferrule 46 étant alors désengagé des nervures 48, il devient possible de procéder au changement de secteur angulaire de la ferrule 42.

La zone 59 où ce changement de secteur angulaire est possible correspond à la troisième zone selon l'invention.

On ne sort pas du cadre de la présente invention en réalisant sur le corps de fiche un nombre différent de nervures.

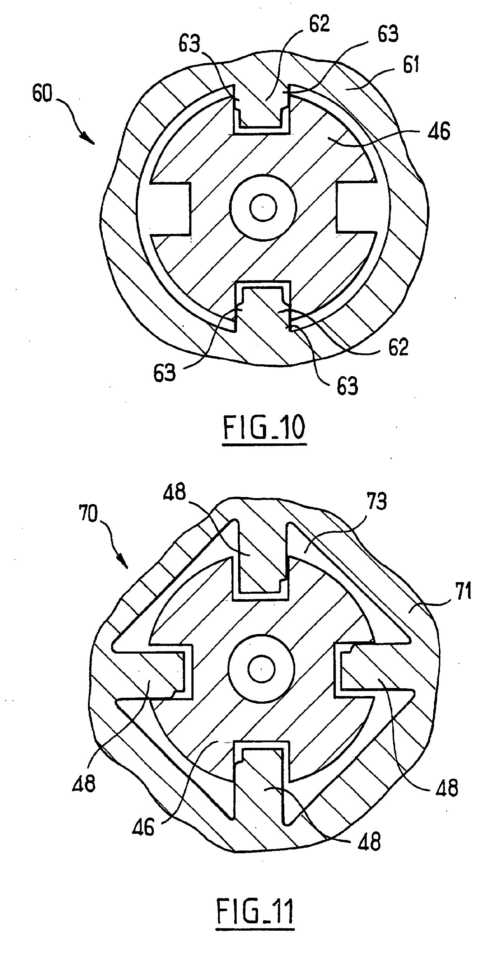

On a représenté en référence à la figure 10 une fiche 60 se différenciant de la fiche 40 précédemment décrite par le fait que le corps de fiche 61 comporte deux nervures 62.

Chaque nervure 62 comporte sur chacun de ses deux flancs latéraux une saillie 63 analogue à une saillie 49 de l'exemple précédent.

Ainsi, lorsque l'ensemble ferrule est dans la première zone, le jeu angulaire est proche de zéro, mais le jeu latéral et le jeu de parallélisme sont non nuls.

On a représenté sur la figure 11 une fiche 70 se différenciant de la fiche 40 par le fait que la cavité 73 du corps de fiche 71 présente une section transversale sensiblement carrée.

Les nervures 48 sont réalisées le long des arrêtes longitudinales de la cavité 73.

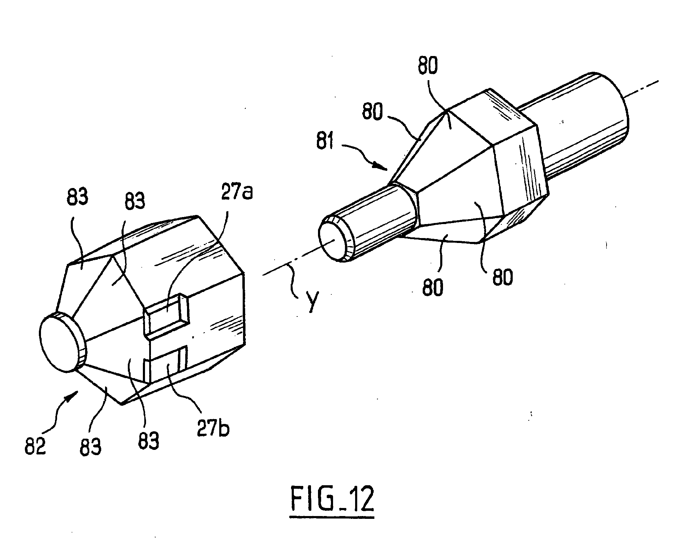

Dans l'exemple illustré à la figure 12, le porte-ferrule comporte à l'avant une surface 81 généralement tronconique convergent vers l'avant. Cette surface 81 est constituée par une pluralité de facettes 80, sensiblement trapézoïdales et disposées tout autour de l'axe Y de l'ensemble ferrule.

Le corps de fiche comporte, à l'avant, une portée d'appui 82 présentant une forme complémentaire de celle de la surface 81 de l'ensemble ferrule, avec une pluralité de facettes 83.

Lorsque l'ensemble ferrule est repoussé au maximum vers l'avant, les facettes 80 et 83 coopèrent de manière à améliorer le blocage en rotation de l'ensemble ferrule par rapport au corps de fiche.

On obtient ainsi, en position libre, une orientation angulaire précise de l'ensemble ferrule dans le corps de fiche.

On va maintenant décrire plus en détail le dispositif 15 de la figure 3.

La distance entre la butée 19 de l'embase 16 et le plan de référence P est choisie de manière à ce que, dans la configuration fiche/embase, la fiche travaille uniquement dans la première zone précitée.

Autrement dit, l'ensemble ferrule, pendant l'opération d'assemblage de la fiche 1 dans l'embase 16 et en fonctionnement normal, ne recule pas au-delà de la première zone de sorte que l'orientation angulaire de la ferrule dans le corps de fiche soit conservée, le jeu angulaire autorisé étant proche de zéro.

La zone de travail dans la configuration fiche/embase correspond à la première zone.

On note ainsi que la longueur de l'embase 16 est supérieure à celle d'une embase classique.

Bien entendu, l'invention n'est pas limitée aux exemples de mise en oeuvre qui viennent d'être décrits.

On peut notamment prévoir dans le corps de fiche un nombre de reliefs différent de ceux décrits précédemment.

On peut également prévoir de tels reliefs ayant des formes différentes de ceux qui viennent d'être décrits tout en permettant de réaliser lesdites première et deuxième zones.

## Revendications

1. Fiche optique (1 ; 40 ; 60 ; 70) comportant un corps de fiche (2 ; 41 ; 61 ; 71) muni d'un organe de verrouillage (4) permettant son assemblage dans un élément complémentaire de connexion, un ensemble ferrule (42) introduit dans ledit corps et comportant une ferrule (3 ; 45) dans laquelle est maintenue une fibre optique (F) terminée par une face optique, et un élément élastique (20) agissant sur l'ensemble ferrule, ladite fiche étant **caractérisée par le fait que** la face optique est oblique par rapport à l'axe de la fibre (F), et le corps de fiche et l'ensemble ferrule sont agencés de manière à ce que :
- dans une première zone axiale (35 ; 55) de longueur non nulle, s'étendant à partir de la position libre et jusqu'avant la position nominale de l'ensemble ferrule dans une configuration fiche/raccord/fiche, le jeu angulaire de l'ensemble ferrule par rapport au corps de fiche soit proche de zéro, de préférence inférieur à une valeur angulaire prédéterminée,
- dans une deuxième zone (36 ; 56) située dans le prolongement immédiat de la première zone axiale et comprenant au moins la zone comprise entre le recul nominal et le recul maximal de l'ensemble ferrule dans la configuration fiche/raccord/fiche, le jeu angulaire de l'ensemble ferrule par rapport au corps de fiche soit supérieur audit jeu angulaire dans la première zone.

2. Fiche selon la revendication 1, **caractérisée par le fait que** la valeur angulaire prédéterminée est inférieure ou égale à deux degrés.

3. Fiche selon l'une des revendications 1 et 2, **caractérisée par le fait que** ladite longueur de la première zone (35 ; 55) est d'au moins 0,1 mm.

4. Fiche selon l'une quelconque des revendications précédentes, **caractérisée par le fait que** la longueur de ladite première zone est sensiblement égale à 0,45 mm.

5. Fiche selon l'une quelconque des revendications précédentes, **caractérisée par le fait qu'**elle est agencée de sorte que, dans ladite deuxième zone (36 ; 56), le jeu latéral en translation entre l'ensemble ferrule et le corps de fiche et/ou le jeu de parallélisme entre les axes respectifs du corps de fiche et de l'ensemble ferrule soient non nuls.

6. Fiche selon l'une quelconque des revendications précédentes, **caractérisée par le fait qu'**elle est agencée de manière à ce que, dans ladite deuxième zone (36 ; 56), le jeu angulaire de l'ensemble ferrule par rapport au corps de fiche soit limité.

7. Fiche selon la revendication 6, la ferrule étant orientable suivant une pluralité de secteurs angulaires, **caractérisée par le fait que** la fiche (1 ; 40 ; 60 ; 70) est agencée de manière à empêcher, dans ladite deuxième zone (36 ; 56), une rotation de la ferrule lui permettant de changer de secteur angulaire.

8. Fiche selon l'une quelconque des revendications précédentes, **caractérisée par le fait que** la deuxième zone (36 ; 56) est comprise entre le recul nominal dans une configuration fiche/raccord/fiche et une distance équivalente à au moins deux fois ce recul nominal.

9. Fiche selon l'une quelconque des revendications précédentes, **caractérisée par le fait qu'**elle comporte une troisième zone (37 ; 59), située à l'arrière des première et deuxième zones, dans laquelle la rotation de l'ensemble ferrule par rapport au corps de fiche est libre.

10. Fiche selon l'une quelconque des revendications précédentes, **caractérisée par le fait que** le corps de fiche comporte au moins deux reliefs (27a-27d ; 48 ; 62) s'étendant dans ladite première zone (35 ; 55), lesdits reliefs et l'ensemble ferrule étant aptes à coopérer de manière à limiter la rotation de l'ensemble ferrule par rapport au corps de fiche.

11. Fiche selon la revendication 10, **caractérisée par le fait que** lesdits reliefs (27a-27d ; 48 ; 62) présentent une forme choisie et/ou sont réalisés dans un matériau choisi de manière à présenter une certaine aptitude à être déformés.

12. Fiche selon l'une des revendications 10 et 11, **caractérisée par le fait que** l'ensemble ferrule comporte un porte-ferrule (26) présentant une portion longitudinale cylindrique de section transversale polygonale et le corps de fiche (2) une cavité (25) présentant, dans ladite première zone, une section transversale sensiblement polygonale du même type que la section du porte-ferrule, les sections polygonales étant notamment du type hexagonal, et **par le fait que** le corps de fiche (2) comporte quatre reliefs (27a-27d) s'étendant dans ladite première zone (35), chacun suivant une arête longitudinale de la cavité et disposés par paires en regard.

13. Fiche selon l'une des revendications 10 et 11, **caractérisée par le fait que** l'ensemble ferrule (42) comporte un porte-ferrule (46) présentant une portion longitudinale cylindrique de section transversale circulaire et comportant au moins deux logements (51), et **par le fait que** lesdits reliefs du corps de fiche sont constitués par des nervures (48) s'étendant au moins sur ladite première zone (55) et aptes à s'engager chacun dans un logement.

14. Fiche selon la revendication 13, **caractérisée par le fait que** lesdites nervures sont au nombre de deux (62) ou quatre (48) et réparties équi-angulairement autour de l'axe du corps de fiche.

15. Fiche selon l'une des revendications 13 ou 14, **caractérisée par le fait que** lesdits logements sont constitués par des encoches (51) équi-angulairement réparties autour de l'axe de l'ensemble ferrule et présentant une section transversale sensiblement rectangulaire.

16. Fiche selon l'une quelconque des revendications 13 à 15, **caractérisée par le fait que** lesdites nervures (62) sont au nombre de deux et présentent chacune sur ses flancs, dans ladite première zone, des saillies (63), l'épaisseur d'une nervure au niveau des saillies étant sensiblement égale à la largeur d'un logement, cette épaisseur étant plus faible dans la deuxième zone.

17. Fiche selon l'une des revendications 14 et 15, **caractérisée par le fait que** le corps de fiche comporte quatre nervures (48) présentant chacune, sur un flanc, une saillie (49), les quatre saillies étant en regard deux à deux et s'étendant sur la première zone, les nervures s'étendant sur les première et deuxième zone.

18. Fiche selon l'une quelconque des revendications 13 à 17, **caractérisée par le fait que** lesdites nervures (62) présentent une hauteur inférieure à la profondeur des logements.

19. Fiche selon l'une quelconque des revendications précédentes, **caractérisée par le fait qu'**elle comporte un porte-ferrule présentant à son extrémité frontale une forme généralement tronconique avec des facettes (80) aptes à coopérer avec des facettes complémentaires (83) réalisées sur le corps de fiche, lorsque l'ensemble ferrule est repoussé au maximum vers l'avant du corps de fiche.

20. Fiche selon l'une quelconque des revendications précédentes, **caractérisée par le fait que** la fibre optique (F) est polie à son extrémité, le plan de polissage étant incliné par rapport à l'axe de la fibre.

21. Dispositif de connexion (15) comportant une fiche optique telle que définie dans l'une quelconque des revendications précédentes, et une embase (16) agencée de manière à ce que la zone de travail de l'ensemble ferrule dans cette configuration fiche/embase se situe dans ladite première zone de la fiche.

22. Dispositif selon la revendication 21, **caractérisé par le fait que** l'embase comporte un élément de guidage (17) destiné à recevoir la ferrule, l'élément de guidage étant agencé de manière à ce que la ferrule de la fiche, lorsqu'elle y est introduite, ne subisse aucun frottement sensible.

23. Dispositif selon la revendication 21, **caractérisé par le fait que** l'embase comporte un élément de guidage de la ferrule maintenant l'orientation angulaire par frottement.

24. Dispositif selon l'une des revendications 21 à 23, **caractérisé par le fait que** l'embase (16) est une embase optique active, notamment un récepteur optique.
